(19) Europäisches Patentamt / European Patent Office / Office européen des brevets

(11) **EP 2 487 319 B1**

(12) **FASCICULE DE BREVET EUROPEEN**

(45) Date de publication et mention
de la délivrance du brevet:
**07.06.2017 Bulletin 2017/23**

(51) Int Cl.:
*E06B 9/68* *(2006.01)*    *H02P 7/285* *(2016.01)*
*H02M 3/155* *(2006.01)*

(21) Numéro de dépôt: **12305156.7**

(22) Date de dépôt: **13.02.2012**

(54) **Dispositif d'occultation motorisé comportant un moteur à courant continu et un dispositif d'alimentation en énergie électrique d'un tel moteur**

Motorisierte Abdeckvorrichtung, die mit einem Gleichstrommotor und einer Vorrichtung zur Zuführung von elektrischer Energie zu einem solchen Motor ausgestattet ist

Motorised concealment device comprising a DC motor and a device for supplying electric power to said motor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2011 FR 1151173**

(43) Date de publication de la demande:
**15.08.2012 Bulletin 2012/33**

(73) Titulaire: **BUBENDORFF
68220 Attenschwiller (FR)**

(72) Inventeur: **Delpy, Vincent
68150 Sierentz (FR)**

(74) Mandataire: **Rhein, Alain
Cabinet Bleger-Rhein-Poupon
4A, rue de l'Industrie
67450 Mundolsheim (FR)**

(56) Documents cités:
**EP-A1- 0 645 518    DE-A1- 19 833 345
FR-A1- 2 488 074**

EP 2 487 319 B1

**Description**

La présente invention a trait à un dispositif d'occultation motorisé comportant un moteur à courant continu ainsi qu'un dispositif d'alimentation en énergie électrique d'une charge à courant continu constituée par un tel moteur.

Cette invention concerne le domaine de la fabrication des dispositifs d'occultation motorisés, en particulier celui de la fabrication des dispositifs électriques conçus pour assurer l'alimentation en énergie électrique d'une charge à courant continu, plus particulièrement constituée par un moteur à courant continu dont la vitesse est directement liée à la tension à ses bornes.

En fait, la présente invention concerne, plus particulièrement mais de manière aucunement limitative, un dispositif, constitué par un variateur de vitesse, et conçu pour assurer l'alimentation en énergie électrique d'une charge à courant continu constituée par un moteur à courant continu, très basse tension, de faible puissance, et dont la vitesse est directement liée à la tension à ses bornes, ceci à partir d'une alimentation secteur.

L'on connaît, d'ores et déjà, des dispositifs électriques conçus pour assurer l'alimentation en énergie électrique d'une charge à courant continu, ceci à partir d'une alimentation secteur.

Un tel dispositif électrique peut se présenter sous la forme d'un dispositif d'alimentation à découpage, lui-même alimenté en énergie électrique par le secteur, et dont la plage de tension d'entrée peut, soit être de type universel (entre 90V et 264V), soit être réduite autour d'une tension secteur nominale d'un pays ou d'une région du monde (par exemple 230V±10%).

Lors de la conception d'un tel dispositif d'alimentation à découpage, les composants sont choisis en sorte que la tension de sortie, donc la tension d'alimentation de la charge, soit fixée et corresponde au besoin de l'application. La principale limitation d'un tel dispositif d'alimentation à découpage consiste, alors, en ce que la tension de sortie est fixe.

L'on connaît, également, des dispositifs électriques conçus pour assurer l'alimentation en énergie électrique d'une charge, ceci en courant alternatif.

Un tel dispositif électrique peut se présenter sous la forme d'un variateur de vitesse, plus particulièrement employé dans les applications relevant du contrôle moteur.

Un tel variateur de vitesse comporte, usuellement, un dispositif de hachage de puissance constitué par un pont de transistors (MOSFET ou IGBT) agencés, soit selon une configuration à 2 branches (pont en H) pour les moteurs à balais, soit selon une configuration à 3 branches (pont triphasé) pour les moteurs sans balais (plus connus sous la dénomination de moteurs brushless). Un tel pont est commandé par des moyens de commande conçus pour générer un ensemble de signaux de type MLI (modulation de largeur d'impulsion).

Un premier inconvénient consiste en ce que ces moyens de commande présentent une complexité croissante en fonction du niveau de performance souhaité pour le moteur.

Un autre inconvénient consiste en ce que ce principe de modulation de largueur d'impulsion MLI génère des commutations fréquentes et rapides qui engendrent des interférences électromagnétiques qu'il convient de filtrer énergiquement pour ne pas perturber les autres appareils électriques ou électroniques situés à proximité.

De plus et dans le cas des moteurs à balais, ceux-ci sont pour la plupart équipés de condensateurs de filtrage dont le rôle est d'atténuer les parasites électriques générés par le frottement des balais sur le collecteur tournant d'un tel moteur. Cependant, ces condensateurs présentent l'inconvénient de perturber le fonctionnement du dispositif de hachage et imposent de recourir à des inductances de lissage du courant.

Dans le document FR-2.488.074 il est décrit un circuit de régulation de vitesse en boucle ouverte pour moteur à courant continu.

Ce circuit de régulation comporte un hacheur de sorte que l'alimentation du moteur est assurée par un dispositif d'alimentation, comportant un tel hacheur, et qui, du fait de la présence d'un tel hacheur, délivre à ce moteur une tension d'alimentation qui n'est aucunement continue. De plus, la présence d'un tel hacheur a pour effet que la tension aux bornes du moteur est hachée à fréquence élevée ce qui génère de nombreux inconvénients. En particulier, le hachage à fréquence élevée génère de nombreux parasites, accroît la fatigue des composants du moteur (en particulier la fatigue des isolants du bobinage du moteur) et s'accompagne d'un niveau élevé de pertes résultant des fréquentes commutations.

Le document EP0645518 décrit un dispositif selon le préambule de la revendication 1. La présente invention se veut de remédier aux inconvénients des dispositifs d'alimentation en énergie électrique de l'état de la technique.

A cet effet, l'invention concerne un dispositif d'occultation motorisé comportant, d'une part, un élément d'occultation mobile, d'autre part, un moteur à courant continu de type basse tension, voire très basse tension, pour l'entraînement en déplacement de l'élément d'occultation mobile et, d'autre part encore, un variateur de vitesse de faible puissance pour l'alimentation en énergie électrique du moteur à courant continu.

Ce dispositif d'occultation est caractérisé par le fait que le variateur de vitesse est constitué par un dispositif d'alimentation en énergie électrique d'une charge à courant continu constituée par le moteur à courant continu, ce dispositif d'alimentation comportant :

- un système d'alimentation à découpage comportant une boucle de contre-réaction incorporant un diviseur de tension conçu pour diviser, selon un rapport de division, une tension d'entrée de ce diviseur de tension, ceci pour l'obtention d'une tension de sortie de ce diviseur de tension ;
- des moyens pour modifier, de manière dynamique, le rapport de division du diviseur de tension qu'incorpore la boucle de contre-réaction.

Selon une caractéristique additionnelle, les moyens pour modifier de manière dynamique le rapport de division comportent un moyen pour modifier le rapport de division ainsi qu'un moyen pour commander ce moyen pour modifier ce rapport de division.

Une autre caractéristique consiste en ce que le moyen pour commander le moyen pour modifier le rapport de division est alimenté par le système d'alimentation à découpage.

Ainsi, le dispositif d'occultation conforme à la présente invention comporte, d'une part, un système d'alimentation à découpage comportant une boucle de contre-réaction incorporant un diviseur de tension conçu pour diviser, selon un rapport de division, une tension d'entrée égale à la tension aux bornes de la charge et, d'autre part, des moyens pour modifier, de manière dynamique, ce rapport de division.

Ainsi et selon une première démarche inventive, le dispositif d'alimentation conforme à la présente invention comporte un système d'alimentation à découpage, ceci malgré les inconvénients connus d'un tel système d'alimentation qui en détourneraient l'homme du métier en charge de la réalisation d'un dispositif d'alimentation d'un moteur à courant continu dont la vitesse est directement liée à la tension à ses bornes, plus particulièrement en charge de la réalisation d'un dispositif d'alimentation constituant un variateur de vitesse pour un tel moteur.

Ce dispositif d'alimentation comporte, donc, un système d'alimentation à découpage qui, de manière avantageuse, intègre les composants classiques d'un système d'alimentation à découpage connu de l'état de la technique.

Selon une autre démarche inventive, ce dispositif d'alimentation comporte, encore, des moyens pour modifier, de manière dynamique, le rapport de division et qui permettent, alors avantageusement, de choisir (voire de modifier ou d'adapter de manière dynamique) la valeur de la tension d'alimentation de la charge, notamment en fonction des besoins de l'application.

Ces moyens pour modifier, de manière dynamique, le rapport de division comportent, d'une part, un moyen pour modifier le rapport de division et, d'autre part, un moyen, alimenté par le système d'alimentation à découpage, pour commander ce moyen pour modifier ce rapport de division. Ces moyens pour modifier le rapport de division permettent, alors, avantageusement, de modifier la tension d'alimentation de la charge et, ainsi (et dans le cas d'une charge constituée par un moteur), de faire varier la vitesse de ce moteur en intervenant sur la boucle de contre-réaction d'un système d'alimentation à découpage (dont la tension de sortie est continue et régulée), ceci au moyen d'un dispositif de contrôle lui-même alimenté par le système d'alimentation à découpage.

De plus, les caractéristiques de ces moyens de modification permettent de lisser, réguler et régler la tension de sortie ce qui permet, avantageusement, d'alimenter la charge avec une tension régulée et lissée à la valeur choisie. Il en résulte que, contrairement aux systèmes de pilotage moteurs de l'état de la technique où le moteur est alimenté par une tension hachée, le dispositif d'alimentation selon l'invention alimente le moteur avec une tension continue ce qui permet, avantageusement, de diminuer les parasites, de réduire la fatigue des composants du moteur (en particulier des isolants du bobinage moteur) et d'atténuer les pertes.

De plus, le fait de pouvoir lisser, réguler et régler la tension de sortie permet, également et de manière avantageuse, d'éviter de recourir à un dispositif de hachage ainsi (et surtout) qu'à des moyens (particulièrement complexes) pour commander un tel dispositif de hachage à l'aide de signaux de type MLI (modulation de largeur d'impulsion).

A ce propos, on observera que le fait d'éviter de recourir à un dispositif de hachage permet, également et avantageusement, d'éviter l'emploi d'un filtre spécifique, plus particulièrement dans le cas d'un dispositif d'alimentation constitué par un variateur de vitesse. De plus, en évitant de recourir à un dispositif de hachage, il est, encore, possible d'utiliser une charge constituée par un moteur à balais prééquipé de condensateurs de filtrage et d'éviter ainsi l'emploi d'inductances de lissage du courant.

De plus, en évitant de recourir à un dispositif de hachage piloté par des moyens de commande de type MLI, on évite de générer des pics de surtension transitoires répétitifs inhérents à un système inductif commuté. L'absence de ces pics de surtension permet, avantageusement, de réduire le stress subi par les semi-conducteurs de puissance et, donc, de prolonger leur durée de vie.

Un autre avantage consiste en ce que, dans le cas d'une charge constituée par un moteur à balais, le pont en H peut être remplacé par un modèle moins performant, notamment présentant une fréquence de commutation beaucoup plus basse ou une dissipation thermique plus faible. Ce pont en H peut, encore, être remplacé, soit par un dispositif à relais électromécanique lorsque le moteur doit pouvoir tourner dans les deux sens de rotation, soit par un simple transistor de puissance type MOSFET si le moteur tourne selon seulement un sens de rotation.

Parallèlement et dans le cas d'une charge constituée par un moteur sans balais (plus connu sous la dénomination de moteur brushless), le principe du pont triphasé doit être conservé mais il est possible d'utiliser un modèle moins performant, notamment présentant, là encore, une fréquence de commutation beaucoup plus basse ou une dissipation thermique plus faible.

La présente invention permet, également, de réaliser un dispositif d'alimentation (plus particulièrement une installation électrique incorporant un tel dispositif d'alimentation) qui peut être de type isolé (plus particulièrement de type flyback) ce qui permet, avantageusement, de sécuriser la partie motrice du moteur (en particulier lorsque celle-ci est déportée par rapport au dispositif d'alimentation) en évitant tout risque d'électrocution.

Finalement, le dispositif d'occultation motorisé comporte un variateur de vitesse constitué par un dispositif d'alimentation en énergie électrique comportant un système d'alimentation à découpage. De manière avantageuse, un tel variateur de vitesse est, alors, au moins en partie constitué par un tel système d'alimentation à découpage contrairement à l'état de la technique où un variateur de vitesse est constitué par un système additionnel qui complète et suit un tel système d'alimentation à découpage.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

- la figure 1 est une représentation synoptique d'un dispositif d'alimentation conforme à la présente invention et comportant une boucle de contre-réaction ;
- la figure 2 est une représentation synoptique et en détail de la boucle de contre-réaction, illustrée figure 1, et comportant un diviseur de tension ;
- les figures 3 à 5 correspondent à des représentations schématisées de différents modes de réalisation du diviseur de tension illustré figure 2.

La présente invention concerne le domaine de la fabrication des dispositifs électriques conçus pour assurer l'alimentation en énergie électrique d'une charge (C) à courant continu, ceci à partir d'une source d'alimentation (S) en énergie électrique.

L'invention concerne, alors, un dispositif d'alimentation 1 en énergie électrique comportant une entrée 2 destinée à être raccordée à une source (S) d'alimentation en énergie électrique, plus particulièrement constituée par une alimentation secteur.

Ce dispositif d'alimentation 1 en énergie électrique comporte, encore, une sortie 3 destinée à être raccordée à une charge (C) à courant continu pour en assurer l'alimentation en énergie électrique, selon le cas en tension et/ou courant.

Selon l'invention, ce dispositif 1 d'alimentation en énergie électrique comporte, encore, au moins un système d'alimentation à découpage 4, interposé entre l'entrée 2 et la sortie 3 de ce dispositif d'alimentation 1.

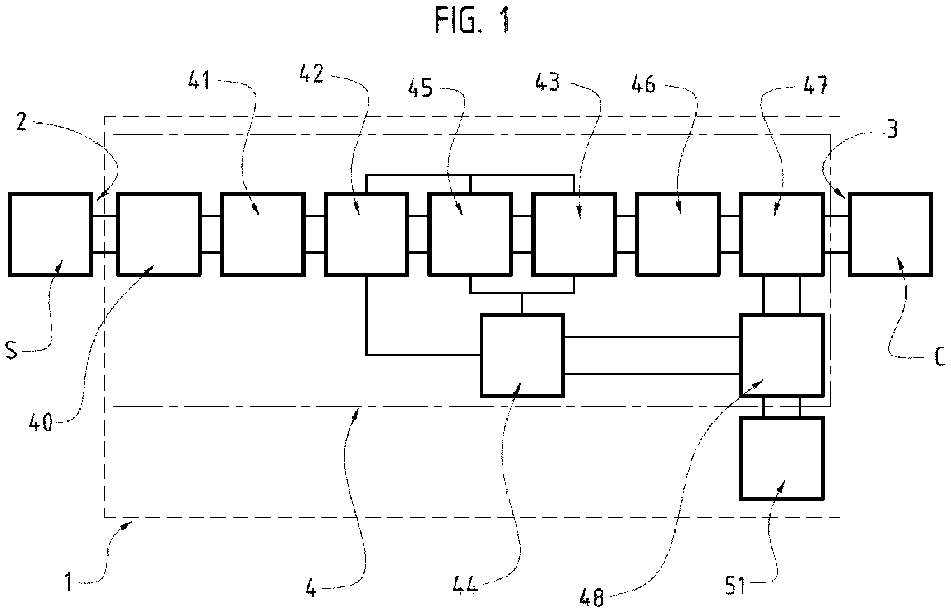

De manière connue et tel que visible figure 1, un tel système d'alimentation à découpage 4 comporte :

- un filtre CEM d'entrée 40 raccordé à l'entrée 2 du dispositif d'alimentation 1 ;
- un redresseur primaire 41, plus particulièrement sous forme d'un pont redresseur ;
- un condensateur réservoir 42 ;
- un élément inductif 43 (sous forme d'une inductance, respectivement d'un transformateur, ceci lorsque le système d'alimentation 4 est non isolé, respectivement isolé) ;
- un découpeur 44 incorporant un contrôleur à découpage, un transistor MOSFET (associé à ce contrôleur à découpage) ainsi que des composants nécessaires à la mise en oeuvre de ce découpeur 44 ;
- un circuit 45 d'aide à la commutation (plus connu sous la dénomination de snubber) ;
- un redresseur secondaire 46 ;
- un condensateur de sortie 47 raccordé à la sortie 3 du dispositif d'alimentation 1 et comportant, éventuellement, un filtre inductif.

Ce système d'alimentation à découpage 4 comporte, encore, une boucle de contre-réaction 48 interposée entre le condensateur de sortie 47 et le découpeur 44.

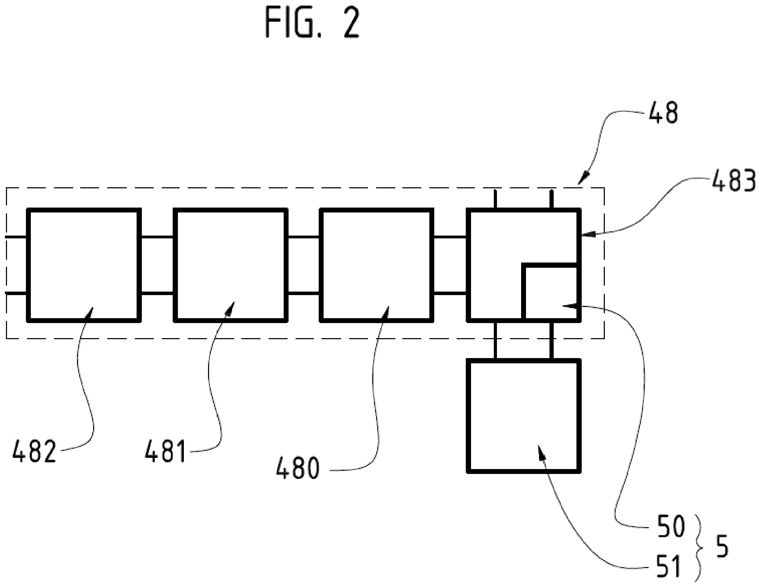

Tel que visible figure 2, cette boucle de contre-réaction 48 incorpore :

- un correcteur 480 conçu pour assurer la stabilité de la boucle de contre-réaction 48 et, ainsi, du système d'alimentation à découpage 4 (et, par conséquent, du dispositif d'alimentation 1) ;
- un comparateur 481, plus particulièrement sous forme d'un comparateur à seuil, notamment incluant une référence de tension fixe Ur ;
- éventuellement, un moyen d'isolation 482, notamment sous forme d'un optocoupleur ou analogue.

Cette boucle de contre-réaction 48 incorpore, encore, un diviseur de tension 483 conçu pour diviser, selon un rapport de division R, une tension d'entrée Ue de ce diviseur de tension 483, ceci pour l'obtention d'une tension Us de sortie de ce diviseur de tension 483.

Cette tension de sortie Us est, alors, définie, par rapport à la tension d'entrée Ue, en sorte que :

$$Us = R * Ue$$

Un tel diviseur de tension 483 est interposé entre, d'une part, le condensateur de sortie 47 que comporte le système d'alimentation à découpage 4 et qui délivre à la charge C une tension d'alimentation Uc (égale à la tension d'entrée Ue du diviseur de tension 483) et, d'autre part, le correcteur 480 que comporte la boucle de contre-réaction 48.

Ce diviseur de tension 483 fournit une tension Us régulée par comparaison avec une tension de référence interne Ur.

On observera que ce diviseur de tension 483 comporte au moins deux résistances (R1 ; R2) branchées en série.

A ce propos, on observera que l'entrée de ce diviseur de tension 483 est, alors, connectée à un ensemble comportant au moins les deux résistances (R1 ; R2) branchées en série et que comporte ce diviseur de tension 483. Cet ensemble de résistances (R1 ; R2) est donc, plus particulièrement, interposé entre les bornes de sortie du condensateur 47.

En ce qui concerne la sortie de ce diviseur de tension 483, celle-ci est connectée aux bornes de l'une R2 des résistances (R1 ; R2) que comporte ce diviseur de tension 483. Cette résistance R2 est donc, plus particulièrement, interposée entre les bornes d'entrée du correcteur 480.

Selon l'invention, ce dispositif d'alimentation 1 comporte, encore, des moyens 5 pour modifier, de manière dynamique, le rapport de division R du diviseur de tension 483 qu'incorpore la boucle de contre-réaction 48.

La présence de ces moyens 5 pour modifier de manière dynamique le rapport de division R du diviseur de tension 483 permet, avantageusement, de faire varier la tension d'entrée Ue de ce diviseur de tension 483 et, par conséquent, la tension de sortie du système d'alimentation à découpage 4 ainsi que celle du dispositif d'alimentation 1 (et, donc également, la tension Uc d'alimentation de la charge C et/ou l'intensité du courant d'alimentation de la charge C), ceci sans recourir à un hacheur de puissance.

Selon une autre caractéristique de l'invention, ces moyens 5 pour modifier de manière dynamique le rapport de division R comportent, d'une part, un moyen 50 pour modifier ce rapport de division R et, d'autre part, un moyen 51 pour commander (de manière dynamique) ce moyen 50 pour modifier ce rapport de division R.

Selon une première caractéristique et tel que visible figure 2, c'est plus particulièrement le diviseur de tension 483 qui comporte un tel moyen 50 pour modifier le rapport de division R.

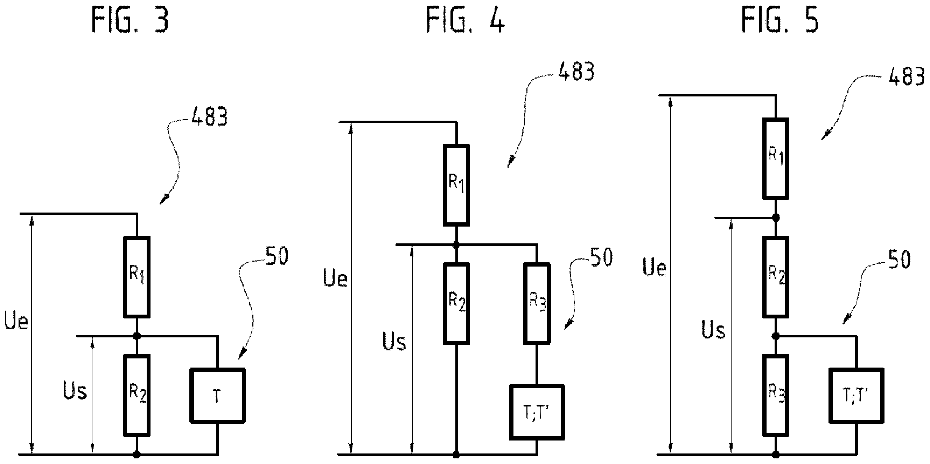

Selon un premier mode de réalisation illustré figures 4 et 5, ce moyen 50 pour modifier le rapport de division R comporte au moins une résistance R3 ainsi qu'au moins un organe de commutation T', notamment sous forme d'un interrupteur, d'un poussoir, d'un relais ou analogue.

On observera qu'un tel organe T' de commutation est conçu pour adopter deux états correspondant, pour l'un, à un état (dit fermé) autorisant la conduction du courant électrique au travers de cet organe T' (taux de conduction 100%) et, pour l'autre, à un état (dit ouvert) n'autorisant pas cette conduction au travers de cet organe T' (taux de conduction 0%).

Cependant et selon un deuxième mode de réalisation, ce moyen 50 pour modifier le rapport de division R comporte au moins un organe T de conduction.

Un tel organe T de conduction peut se présenter sous la forme d'un transistor (de type JFET, MOSFET, bipolaire ou autre), d'un phototransistor, d'une résistance variable, d'un potentiomètre (notamment de type manuel ou numérique) ou analogue.

Un tel organe T de conduction est conçu pour adopter une pluralité d'états, notamment de manière continue, ceci entre, d'une part, un état (dit saturé) autorisant la conduction du courant électrique au travers de cet organe T (taux de conduction 100%) et, d'autre part, un état (dit bloqué) n'autorisant pas cette conduction (taux de conduction 0%).

Aussi et selon un premier type de réalisation de ce deuxième mode de réalisation, ce moyen 50 pour modifier le rapport de division R comporte uniquement au moins un tel organe T de conduction, plus particulièrement un unique organe T de conduction (figure 3).

Un tel organe T de conduction est, alors, branché en parallèle avec la résistance R2 que comporte le diviseur de tension 483 et qui est connectée à la sortie de ce diviseur de tension 483.

Cependant et selon un deuxième type de réalisation de ce deuxième mode de réalisation illustré figures 4 et 5, ce moyen 50 pour modifier le rapport de division R comporte au moins un tel organe T de conduction ainsi qu'au moins une résistance R3, que comporte le moyen 50 pour modifier le rapport de division R, et qui vient compléter ledit organe T de conduction.

Ainsi et tel que mentionné ci-dessus, le moyen 50 pour modifier le rapport de division R peut comporter au moins une résistance R3 ainsi que, selon le cas, au moins un organe T' de commutation ou au moins un organe T de conduction.

Selon un premier mode de réalisation illustré figure 4, la résistance R3 et ledit organe (selon le cas, de commutation T' ou de conduction T) sont branchés en série tandis que l'ensemble constitué par cette résistance R3 et cet organe (T ou T') est branché en parallèle sur la résistance R2 que comporte le diviseur de tension 483 et qui est connectée à la sortie de ce diviseur de tension 483. Les résistances R1 et R2 sont branchées en série et l'ensemble constitué par ces deux résistances (R1 et R2) en série est connecté à l'entrée du diviseur de tension 483.

Pour ce premier mode de réalisation, le rapport de division R est, alors, défini par :

$$R = [ (R2*R3)/(R2+R3) ] / [ R1 + (R2*R3)/(R2+R3) ]$$

Soit encore :

$$R = 1 / [ 1 + R1 * (R2+R3)/(R2*R3) ]$$

Dans un pareil cas, lorsque l'organe (T ; T') ne conduit pas du tout, le rapport de division R devient :

$$R = R2 / (R1 + R2)$$

Soit encore :

$$R = 1 / [ 1 + (R1/R2) ]$$

Le comparateur 481, dont le rôle est de maintenir à tout instant la valeur de la tension de sortie Us du diviseur de tension 483 à une valeur égale à une tension de référence interne connue Ur, ajuste le fonctionnement du découpeur 44 de sorte que Us = Ur, ce qui donne, sachant que Us = R * Ue :

$$Ue = Ur / R$$

La tension d'entrée Ue1 du diviseur de tension 483 devient, alors :

$$Ue1 = (1 + R1/R2) * Ur$$

Cette tension d'entrée Ue1 est, par conséquent, identique à la tension d'entrée Ue0 du diviseur de tension 483 en l'absence de moyens 5 pour modifier de manière dynamique le rapport de division R.

Cependant, lorsque ledit organe (T ; T') est complètement conducteur, la tension d'entrée Ue2 devient, alors :

$$Ue2 = [1 + R1 * (R2+R3)/(R2*R3)] * Ur$$

Il en résulte que la tension de sortie du dispositif d'alimentation 1 (qui est égale à la tension de sortie du système d'alimentation à découpage 4, à la tension Uc d'alimentation de la charge C et à la tension d'entrée Ue du diviseur de tension 483), est alors susceptible :

- d'être fixée, selon le cas, à Ue1 ou à Ue2, ceci en fonction de l'état (ouvert avec un taux de conduction de 0% ou fermé avec un taux de conduction de 100%) de l'organe T' de commutation ;
- d'évoluer entre Ue1 et Ue2, ceci en fonction du taux de conduction (entre 0 et 100%) de l'organe T de conduction.

Ce premier mode de réalisation présente l'avantage qu'en l'absence de commande sur l'organe (T ; T') [par exemple pendant la phase d'initialisation du moyen de commande 51 ou lorsque la charge C constituée par un moteur est à l'arrêt] la tension de sortie, par défaut, du système d'alimentation à découpage 4 (et, donc, du dispositif d'alimentation 1) correspond à la tension minimale Ue1 ce qui limite, avantageusement, la puissance consommée par le dispositif d'alimentation 1 en veille.

Selon un deuxième mode de réalisation illustré figure 5 :

- la résistance R3 et l'organe (selon le cas, de commutation T' ou de conduction T) sont branchés en parallèle ;
- la résistance R3 de ce moyen 50 pour modifier le rapport de division et la résistance R2 du diviseur de tension 483, d'une part, sont branchés en série et, d'autre part, forment un ensemble connecté à la sortie de ce diviseur de tension 483 ;
- les résistances (R1, R2 et R3) sont branchées en série et forment un ensemble connecté à l'entrée du diviseur de tension 483.

Pour ce deuxième mode de réalisation, le rapport de division R est, alors, défini par :

$$R = (R2 + R3) / (R1 + R2 + R3)$$

Dans un pareil cas, lorsque l'organe (T ; T') ne conduit pas du tout, la tension d'entrée Ue1 devient :

$$Ue1 = [ (R1 + R2 + R3) / (R2 + R3) ] * Ur$$

Cependant, lorsque l'organe (T ; T') est complètement conducteur, le rapport de division R devient :

$$R = R2 / (R1 + R2)$$

La tension d'entrée Ue2 du diviseur de tension 483 devient, alors :

$$Ue2 = (1 + R1/R2) * Ur$$

Cette tension d'entrée Ue2 est, par conséquent, identique à la tension d'entrée Ue0 du diviseur de tension 483 en l'absence de moyens 5 pour modifier de manière dynamique le rapport de division R.

Il en résulte que, quel que soit le mode de réalisation, la tension de sortie du dispositif d'alimentation 1 (qui est égale à la tension Uc d'alimentation de la charge C, à la tension de sortie du système d'alimentation à découpage 4 et à la tension d'entrée Ue du diviseur de tension 483) est, alors, susceptible :

- d'être fixée, selon le cas, à Ue1 ou à Ue2, ceci en fonction de l'état (ouvert avec un taux de conduction de 0% ou fermé avec un taux de conduction de 100%) de l'organe T' de commutation ;
- d'évoluer entre Ue1 et Ue2, ceci en fonction du taux de conduction (entre 0 et 100%) de l'organe T de conduction.

De plus, on observera que, quel que soit le mode de réalisation, la valeur des résistances R1, R2 et R3 est choisie en sorte que :

- la tension Ue1 corresponde à la tension minimale de la charge C ;
- la tension Ue2 corresponde à la tension maximale de la charge C ;
- le courant de polarisation minimal Ip du diviseur de tension 483 permette de charger suffisamment l'alimentation pour garantir le fonctionnement à vide de la charge C.

A ce propos, on observera que, dans le cas, d'une part, d'un dispositif d'alimentation 1 constitué par un variateur de vitesse (tel qu'il sera décrit ci-dessous) et, d'autre part, d'une charge C constituée par un moteur à courant continu dont la vitesse est directement reliée à la tension à ses bornes, ces modes de réalisation permettent, avantageusement, une modification du rapport de division R en sorte que ce moteur peut adopter :

- deux vitesses, l'une lente (correspondant à une tension d'entrée Ue1) et l'autre rapide (correspondant à une tension d'entrée Ue2), ceci dans le cas d'un moyen 50 pour modifier le rapport de division R comportant au moins un organe T' de commutation ;
- toute une gamme de vitesses comprises entre cette vitesse lente (correspondant à une tension d'entrée Ue1) et cette vitesse rapide (correspondant à une tension d'entrée Ue2), ceci dans le cas d'un moyen 50 pour modifier le rapport de division R comportant au moins un organe T de conduction.

Tel que mentionné ci-dessus, les moyens 5 pour modifier de manière dynamique le rapport de division R comportent un moyen 51 pour commander (de manière dynamique) le moyen 50 pour modifier ce rapport de division R.

Selon un premier mode de réalisation, un tel moyen de commande 51 peut être de type manuel et/ou mécanique et adopter, alors, la forme d'un sélecteur, d'un potentiomètre ou analogue.

Cependant et selon un mode de réalisation préféré de l'invention, un tel moyen de commande 51 est de type électrique et/ou automatisé.

Ainsi, ce moyen de commande 51 peut être conçu pour commander l'organe (selon le cas, de commutation T' ou de conduction T) de manière électrique et :

- soit par le biais d'une tension de commande (plus particulièrement une tension grille-source) ce qui convient, plus particulièrement, à un organe T de conduction sous forme d'un transistor de type JFET, MOSFET ou analogue ;
- soit par le biais d'un courant de commande (plus particulièrement un courant de base) ce qui convient, plus particulièrement, à un organe T de conduction sous forme d'un transistor de type bipolaire ou analogue.

Dans le cas d'un organe T de conduction, ces grandeurs (tension grille-source, courant de base) évoluent dans une plage qui couvre la transition complète d'un état bloqué vers un état saturé de cet organe T, quelle que soit sa technologie.

On observera qu'un tel moyen de commande 51 peut, alors, adopter la forme d'une logique programmable, d'un microcontrôleur ou analogue apte à mettre en oeuvre les mécanismes et/ou les algorithmes nécessaires à la gestion du fonctionnement de la charge C, notamment la gestion de la vitesse d'un moteur constituant une telle charge C.

En particulier, ces mécanismes et/ou ces algorithmes peuvent être constitués par des rampes ou des paliers de tension, par un asservissement de la tension de la charge C en fonction d'une caractéristique de son fonctionnement (notamment un asservissement de la tension d'un moteur constituant une telle charge C en fonction de sa vitesse réelle) ou, encore, tout autre procédé ayant pour but de contrôler le fonctionnement de cette charge C (notamment la rotation d'un moteur constituant une telle charge C).

Une autre caractéristique de ce moyen de commande 51 consiste en ce qu'il est, de préférence, alimenté par le système d'alimentation à découpage 4, plus particulièrement par le condensateur de sortie 47 mentionné ci-dessus.

Tel que mentionné ci-dessus, la présente invention concerne un dispositif 1 d'alimentation en énergie électrique d'une charge C à courant continu.

A ce propos, il convient d'observer que les caractéristiques mentionnées ci-dessus pour un tel dispositif d'alimentation 1 sont choisies en sorte qu'un tel dispositif d'alimentation 1 constitue un dispositif d'alimentation 1 présentant une faible puissance, à savoir une puissance inférieure à 100W.

Un tel dispositif d'alimentation 1 est, alors, plus particulièrement adapté à l'alimentation en énergie électrique d'une charge C à courant continu de type basse tension (de l'ordre de 10 à 70 volts), voire de type très basse tension (de l'ordre de 2 à 10 volts).

Selon un mode préféré de réalisation, une telle charge C à courant continu est constituée par un moteur à courant continu dont la vitesse est directement reliée à la tension à ses bornes.

En fait, dans un pareil cas, le dispositif d'alimentation 1 en énergie électrique d'un tel moteur (et présentant les caractéristiques mentionnée ci-dessus) constitue un variateur de vitesse pour un tel moteur.

La présente invention concerne, alors, plus particulièrement, un variateur de vitesse de faible puissance (à savoir une puissance inférieure à 100W) conçu pour l'alimentation en énergie électrique d'une charge C à courant continu constituée par un moteur à courant continu de type basse tension (de l'ordre de 10 à 70 volts), voire très basse tension (de l'ordre de 2 à 10 volts).

Une autre caractéristique consiste en que cette invention concerne, également, une installation électrique comportant :

- un dispositif 1 d'alimentation en énergie électrique présentant les caractéristiques mentionnées ci-dessus ;
- une charge C à courant continu, là encore, présentant les caractéristiques mentionnées ci-dessus et alimentée en énergie électrique par un tel dispositif 1 d'alimentation.

En particulier, une telle installation électrique peut, alors, comporter :

- un dispositif 1 d'alimentation en énergie électrique constituant un variateur de vitesse tel que mentionné ci-dessus (plus particulièrement de faible puissance);
- une charge C à courant continu, constituée par un moteur à courant continu tel que mentionné ci-dessus (plus particulièrement de type basse tension, voire très basse tension), et alimentée en énergie électrique par un tel variateur de vitesse.

Cette invention trouvera une application particulièrement appropriée (mais aucunement limitative) lorsqu'il s'agit d'alimenter en énergie électrique une charge C à courant continu constituée par un moteur à courant continu, d'une part, que comporte un dispositif d'occultation motorisé (notamment un volet roulant, un store ou analogue) et, d'autre part, qui est conçu pour entraîner en déplacement (déploiement et repliement) un élément d'occultation mobile (notamment un tablier ou analogue) que comporte un tel dispositif d'occultation.

L'invention concerne, alors également, un dispositif d'occultation motorisé comportant, d'une part, un tel élément d'occultation mobile (tablier ou analogue), d'autre part, un moteur à courant continu de type basse tension (de l'ordre de 10 à 70 volts), voire très basse tension (de l'ordre de 2 à 10 volts), pour l'entraînement en déplacement d'un tel élément d'occultation mobile et, d'autre part encore, un variateur de vitesse de faible puissance (à savoir de puissance inférieure à 100W) pour l'alimentation d'un tel moteur à courant continu.

Selon l'invention, le variateur de vitesse de ce dispositif d'occultation motorisé est constitué par un dispositif d'alimentation en énergie électrique présentant les caractéristiques décrites ci-dessus.

## Revendications

1. Dispositif d'occultation motorisé comportant, d'une part, un élément d'occultation mobile, d'autre part, un moteur à courant continu de type basse tension, voire très basse tension, pour l'entraînement en déplacement de l'élément d'occultation mobile et, **caractérisé en ce que** il comporte d'autre part encore, un variateur de vitesse de faible puissance pour l'alimentation en énergie électrique du moteur à courant continu, variateur de vitesse étant constitué par un dispositif (1) d'alimentation en énergie électrique et avec une tension continue d'une charge (C) à courant continu constituée par le moteur à courant continu, ce dispositif d'alimentation (1) comportant :

   - un système (4) d'alimentation à découpage dont la tension de sortie est continue et régulée et comportant une boucle de contre-réaction (48) incorporant un diviseur de tension (483) conçu pour diviser, selon un rapport de division (R), une tension d'entrée (Ue) de ce diviseur de tension (483), ceci pour l'obtention d'une tension de sortie (Us) de ce diviseur de tension (483);
   - des moyens (5) pour modifier, de manière dynamique, le rapport de division (R) du diviseur de tension (483) qu'incorpore la boucle de contre-réaction (48).

2. Dispositif d'occultation selon la revendication 1, **caractérisé par le fait que** les moyens (5) pour modifier de manière dynamique le rapport de division (R) comportent un moyen (50) pour modifier le rapport de division (R) ainsi qu'un moyen (51) pour commander ce moyen (50) pour modifier ce rapport de division (R).

3. Dispositif d'occultation selon la revendication 2, **caractérisé par le fait que** le moyen (51) pour commander le moyen (50) pour modifier le rapport de division (R) est de type électrique et/ou automatisé.

4. Dispositif d'occultation selon l'une quelconque des revendications 2 ou 3, **caractérisé par le fait que** le moyen (51) pour commander le moyen (50) pour modifier le rapport de division (R) est alimenté par le système (4) d'alimentation à découpage.

5. Dispositif d'occultation selon l'une quelconque des revendications 2 à 4, **caractérisé par le fait que** le moyen (51) pour commander le moyen (50) pour modifier le rapport de division (R) est constitué par une logique programmable ou un microcontrôleur apte à mettre en oeuvre les mécanismes et/ou les algorithmes nécessaires à la gestion du fonctionnement de la charge (C).

6. Dispositif d'occultation selon l'une quelconque des revendications 2 à 5, **caractérisé par le fait que** le moyen (50) pour modifier le rapport de division (R) comporte au moins une résistance (R3) ainsi qu'au moins un organe de commutation (T'), notamment sous forme d'un interrupteur, d'un poussoir, d'un relais ou analogue.

7. Dispositif d'occultation selon l'une quelconque des revendications 2 à 5, **caractérisé par le fait que** le moyen (50) pour modifier le rapport de division (R) comporte au moins un organe (T) de conduction, notamment sous forme d'un transistor, d'un phototransistor, d'une résistance variable, d'un potentiomètre ou analogue.

8. Dispositif d'occultation selon la revendication 7, **caractérisé par le fait que** l'organe (T) de conduction est complété par au moins une résistance (R3) que comporte le moyen (50) pour modifier le rapport de division (R).

9. Dispositif d'occultation selon l'une quelconque des revendications 6 ou 8, **caractérisé par le fait que** le diviseur de tension (483) comporte au moins deux résistances (R1 ; R2) branchées en série et que, d'une part, la sortie de ce diviseur de tension (483) est connectée à l'une (R2) des résistances (R1 ; R2) que comporte ce diviseur de tension (483) et, d'autre part, l'entrée de ce diviseur de tension (483) est connectée à un ensemble comportant au moins les deux résistances (R1 ; R2) branchées en série et que comporte ce diviseur de tension (483). 3.

10. Dispositif d'occultation selon la revendication 9, **caractérisé par le fait que** :

   - la résistance (R3) et l'organe, selon le cas de commutation (T') ou de conduction (T), sont branchés en série tandis que l'ensemble constitué par cette résistance (R3) et cet organe (T ; T') est branché en parallèle sur la résistance (R2) que comporte le diviseur de tension (483) et qui est connectée à la sortie de ce diviseur de tension (483);
   - les résistances (R1) et (R2) sont branchées en série et l'ensemble constitué par ces deux résistances (R1 ; R2) en série est connecté à l'entrée du diviseur de tension (483).

11. Dispositif d'occultation selon la revendication 9, **caractérisé par le fait que** :

   - la résistance (R3) et l'organe, selon le cas de commutation (T') ou de conduction (T) sont branchés en parallèle ;
   - la résistance (R3) de ce moyen (50) pour modifier le rapport de division et la résistance (R2) du diviseur de tension (483), d'une part, sont branchés en série et, d'autre part, forment un ensemble connecté à la sortie de ce diviseur de tension (483);
   - les résistances (R1, R2 et R3) sont branchées en série et forment un ensemble connecté à l'entrée du diviseur de tension (483).

12. Dispositif d'occultation selon l'une quelconque des revendications précédentes, **caractérisé par le fait que** le dispositif (1) d'alimentation présente une faible puissance, à savoir une puissance inférieure à 100W, tandis que le moteur à courant continu est de type basse tension, à savoir de l'ordre de 10 à 70 volts.

13. Dispositif d'occultation selon l'une quelconque des revendications précédentes, **caractérisé par le fait que** le dispositif (1) d'alimentation constitue un variateur de vitesse conçu pour l'alimentation en énergie électrique d'une charge (C) à courant continu constituée par un moteur à courant continu dont la vitesse est directement reliée à la tension à ses bornes.

## Patentansprüche

1. Motorisierte Abdeckvorrichtung, umfassend, einerseits, ein bewegliches Abdeckelement, andererseits, einen Gleichstrommotor der Art Niederspannung, sogar mit sehr niedriger Spannung, zum Antrieb in Verschiebung des beweglichen Abdeckelements, und **dadurch gekennzeichnet, dass** sie, noch andererseits, einen Drehzahlregler niedriger Leistung für die elektrische Stromversorgung des Gleichstrommotors umfasst, wobei der Drehzahlregler aus einer Vorrichtung (1) zur elektrischen Stromversorgung und mit einer Gleichspannung einer Gleichstrom-Last (C) besteht, die aus dem Gleichstrommotor besteht, wobei diese Stromversorgungsvorrichtung (1) Folgendes umfasst :

   - ein getaktes Versorgungssystem (4), dessen Ausgangsspannung kontinuierlich und reguliert ist, und das eine Rückkopplungsschleife (48) umfasst, die einen Spannungsteiler (483) enthält, der ausgebildet ist, um eine Eingangsspannung (Ue) dieses Spannungsteilers (483) entsprechend einem Teilungsverhältnis (R) zu teilen, und zwar um eine Ausgangsspannung (Us) dieses Spannungsteilers (483) zu erhalten ;
   - Mittel (5) zum dynamischen Ändern des Teilungsverhältnisses (R) des Spannungsteilers (483), den die Rückkopplungsschleife (48) enthält.

2. Abdeckvorrichtung nach Anspruch 1, **dadurch gekennzeichnet, dass** die Mittel (5) zum dynamischen Ändern des Teilungsverhältnisses (R) ein Mittel (50) zum Ändern des Teilungsverhältnisses (R) sowie ein Mittel (51) zum Steuern dieses Mittels (50) zum Ändern dieses Teilungsverhältnisses (R) umfassen.

3. Abdeckvorrichtung nach Anspruch 2, **dadurch gekennzeichnet, dass** das Mittel (51) zum Steuern des Mittels (50) zum Ändern des Teilungsverhältnisses (R) elektrischer und/oder automatisierter Art ist.

4. Abdeckvorrichtung nach irgendeinem der Ansprüche 2 oder 3, **dadurch gekennzeichnet, dass** das Mittel (51) zum Steuern des Mittels (50) zum Ändern des Teilungsverhältnisses (R) durch das getaktes Versorgungssystem (4) mit Strom versorgt wird.

5. Abdeckvorrichtung nach irgendeinem der Ansprüche 2 oder 4, **dadurch gekennzeichnet, dass** das Mittel (51) zum Steuern des Mittels (50) zum Ändern des Teilungsverhältnisses (R) aus einer programmierbaren Logik oder einem Mikrokontroller besteht, die/der geeignet ist, die für den Betrieb der Last (C) notwendigen Mechanismen und/oder Algorithmen anzuwenden.

6. Abdeckvorrichtung nach irgendeinem der Ansprüche 2 oder 5, **dadurch gekennzeichnet, dass** das Mittel (50) zum Ändern des Teilungsverhältnisses (R) mindestens einen Widerstand (R3) sowie mindestens ein Schaltorgan (T'), nämlich in der Form eines Schalters, eines Druckknopfes, eines Relais oder dergleichen, umfasst.

7. Abdeckvorrichtung nach irgendeinem der Ansprüche 2 oder 5, **dadurch gekennzeichnet, dass** das Mittel (50) zum Ändern des Teilungsverhältnisses (R) mindestens ein Leitungsorgan (T), nämlich in der Form eines Transistors, eines Fototransistor, eines veränderlichen Widerstands, eines Potentiometers oder dergleichen, umfasst.

8. Abdeckvorrichtung nach Anspruch 7, **dadurch gekennzeichnet, dass** das Leitungsorgan (T) mit wenigstens einem Widerstand (R3), den das Mittel (50) zum Ändern des Teilungsverhältnisses (R) umfasst, ergänzt ist.

9. Abdeckvorrichtung nach irgendeinem der Ansprüche 6 oder 8, **dadurch gekennzeichnet, dass** der Spannungsteiler (483) wenigstens zwei in Reihe geschaltete Widerstände (R1 ; R2) umfasst, und dass, einerseits, der Ausgang dieses Spannungsteilers mit einem der Widerstände (R1 ; R2), welche dieser Spannungsteiler (483) umfasst, verbunden ist und, andererseits, der Eingang dieses Spannungsteilers mit einer Baugruppe, die mindestens die zwei in Reihe geschalteten Widerstände (R1 ; R2) und welche dieser Spannungsteiler (483) umfasst, verbunden ist.

10. Abdeckvorrichtung nach Anspruch 9, **dadurch gekennzeichnet, dass** :

   - der Widerstand (R3) und das je nach dem Fall Schalt- (T') bzw. Leitungsorgan (T) in Reihe geschaltet sind, während die aus diesem Widerstand (R3) und diesem Organ (T ; T') bestehende Baugruppe parallel mit dem Widerstand (R2) geschaltet ist, den der Spannungsteiler (483) umfasst und der mit dem Ausgang dieses Spannungsteilers (483) verbunden ist;
   - die Widerstände (R1) und (R2) in Reihe geschaltet sind, und die aus diesen beiden in Reihe geschalteten Widerständen (R1 ; R2) bestehende Baugruppe mit dem Eingang des Spannungsteilers (483) verbunden ist.

11. Abdeckvorrichtung nach Anspruch 9, **dadurch gekennzeichnet, dass** :

   - der Widerstand (R3) und das je nach dem Fall Schalt- (T') bzw. Leitungsorgan (T) parallel geschaltet sind ;
   - der Widerstand (R3) dieses Mittels (50) zum Ändern des Teilungsverhältnisses und der Widerstand (R2) des Spannungsteilers (483), einerseits, in Reihe geschaltet sind und, andererseits, eine Baugruppe bilden, die mit dem Ausgang dieses Spannungsteilers (483) verbunden ist;
   - die Widerstände (R1, R2 und R3) in Reihe geschaltet sind und eine Baugruppe bilden, die mit dem Eingang des Spannungsteilers (483) verbunden ist.

12. Abdeckvorrichtung nach irgendeinem der vorhergehenden Ansprüche, **dadurch gekennzeichnet, dass** die Versorgungsvorrichtung (1) eine niedrige Leistung, nämlich eine Leistung von weniger als 100 Watt, aufweist, während der Gleichstrommotor der Art mit niedriger Spannung, nämlich der Größenordnung von 10 bis 70 Volt, ist.

13. Abdeckvorrichtung nach irgendeinem der vorhergehenden Ansprüche, **dadurch gekennzeichnet, dass** die Versorgungsvorrichtung (1) einen Drehzahlregler bildet, der für die elektrische Stromversorgung einer Gleichstrom-Last (C), die aus einem Gleichstrommotor besteht, dessen Geschwindigkeit direkt von der Spannung an seinen Anschlüssen abgängig ist, ausgebildet ist.

**Claims**

1.  A motorized concealment device comprising, on the one hand, a movable concealment element and, on the other hand, a low-voltage, even very low voltage, direct-current motor for driving the movable concealment element in displacement, wherein it includes, yet on the other hand, a low-power speed controller for supplying electrical power to the direct-current motor, the speed controller consisting of a device (1) for supplying electrical power and with a direct voltage of a direct-current load (C) consisting of the direct-current motor, said supply device (1) including:

    - a switching power supply system (4), the output voltage of which is continuous and regulated, and including a feedback loop (48) incorporating a voltage divider (483) designed to divide, according to a division ratio (R), an input voltage (Ue) of this voltage divider (483), in order to obtain an output voltage (Us) of this voltage divider (483);
    - means (5) for dynamically changing the division ratio (R) of the voltage divider (483) incorporated in the feedback loop (48).

2.  The concealment device according to claim 1, wherein the means (5) for dynamically changing the division ratio (R) include a means (50) for changing the division ratio (R) as well as a means (51) for controlling this means (50) for changing this division ratio (R).

3.  The concealment device according to claim 2, wherein the means (51) for controlling the means (50) for changing the division ratio (R) is of the electric and/or automated type.

4.  The concealment device according to any one of claims 2 or 3, wherein the means (51) for controlling the means (50) for changing the division ratio (R) is supplied by the switching power supply system (4).

5.  The concealment device according to any one of claims 2 to 4, wherein the means (51) for controlling the means (50) for changing the division ratio (R) consists of a programmable logic or a microcontroller capable of implementing the mechanisms and/or the algorithms necessary for managing the operation of the load (C).

6.  The concealment device according to any one of claims 2 to 5, wherein the means (50) for changing the division ratio (R) includes at least one resistor (R3) as well as at least one switching organ (T'), namely in the form of a switch, a push-button, a relay or the like.

7.  The concealment device according to any one of claims 2 to 5, wherein the means (50) for changing the division ratio (R) includes at least one conduction organ (T), namely in the form of a transistor, a phototransistor, a varying resistor, a potentiometer or the like.

8.  The concealment device according to claim 7, wherein the conduction organ (T) is complemented with at least one resistor (R3) the means (50) for changing the division ratio (R) includes.

9.  The concealment device according to any one of claims 6 or 8, wherein the voltage divider (483) includes at least two resistors (R1, R2) connected in series and, on the one hand, the outlet of this voltage divider (483) is connected to one (R2) of the resistors (R1 ; R2) this voltage divider (483) includes and, on the other hand, the inlet of this voltage divider (483) is connected to an assembly including at least the two resistors (R1; R2) connected in series this voltage divider (483) includes.

10. The concealment device according to claim 9, wherein:

    - the resistor (R3) and the switching organ (T') or the conduction organ (T), as the case may be, are connected in series, while the assembly consisting of this resistor (R3) and this organ (T ; T') is connected in parallel to the resistor (R2) the voltage divider (483) includes and which is connected to the outlet of this voltage divider (483);
    - the resistors (R1) and (R2) are connected in series and the assembly consisting of these two resistors (R1 ; R2) in series is connected to the inlet of the voltage divider (483).

11. The concealment device according to claim 9, wherein:

    - the resistor (R3) and the switching organ (T') or conduction organ (T), as the case may be, are connected in parallel ;

- the resistor (R3) of this means (50) for changing the dividing ratio and the resistor (R2) of the voltage divider (483), on the one hand, are connected in series and, on the other hand, form an assembly connected to the outlet of this voltage divider (483);
- the resistors (R1, R2 and R3) are connected in series and form an assembly connected to the inlet of the voltage divider (483).

12. The concealment device according to any one of the preceding claims, wherein the power supply device (1) has a low power, namely a power of less than 100W, while the direct-current motor is of the low voltage type, namely within the range of 10 to 70 volts.

13. The concealment device according to any one of the preceding claims, wherein the power supply device (1) constitutes a speed controller designed to supply electrical energy to direct-current load (C) consisting of a direct-current motor, the speed of which is directly related to the voltages at its terminals.

# FIG. 1

# FIG. 2

# FIG. 3

# FIG. 4

# FIG. 5

EP 2 487 319 B1

**EP 2 487 319 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2488074
- EP 0645518 A